(19) **Europäisches Patentamt / European Patent Office / Office européen des brevets**

(11) **EP 4 159 802 A1**

(12) **EUROPEAN PATENT APPLICATION**
published in accordance with Art. 153(4) EPC

(43) Date of publication:
05.04.2023 Bulletin 2023/14

(21) Application number: 21812568.0

(22) Date of filing: 27.05.2021

(51) International Patent Classification (IPC):
$C08K\ 5/13$ (2006.01)    $C08L\ 33/26$ (2006.01)
$C08L\ 101/14$ (2006.01)    $D21H\ 21/06$ (2006.01)
$C08L\ 71/02$ (2006.01)    $C08K\ 3/10$ (2006.01)

(52) Cooperative Patent Classification (CPC):
C08K 3/10; C08K 5/13; C08L 33/26; C08L 71/02;
C08L 101/14; D21H 21/06

(86) International application number:
PCT/JP2021/020108

(87) International publication number:
WO 2021/241662 (02.12.2021 Gazette 2021/48)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.05.2020 JP 2020093135

(71) Applicant: Sumitomo Seika Chemicals Co., Ltd.
Kako-gun, Hyogo 675-0145 (JP)

(72) Inventors:
• SAINOU, Naoki
Himeji-shi, Hyogo 672-8076 (JP)
• FUJISAKI, Motoharu
Himeji-shi, Hyogo 672-8076 (JP)

(74) Representative: Mewburn Ellis LLP
Aurora Building
Counterslip
Bristol BS1 6BX (GB)

(54) **WATER-SOLUBLE POLYMER COMPOSITION**

(57) The present invention provides a water-soluble polymer composition which is suppressed in decrease of the viscosity over time if formed into an aqueous solution that contains iron ions. A water-soluble polymer composition which contains a water-soluble polymer, a phenolic antioxidant and an inorganic salt other than a transition metal salt, wherein the content of the inorganic salt is from 0.001 part by mass to 10 parts by mass relative to 100 parts by mass of the water-soluble polymer.

FIG. 1

**Description**

TECHNICAL FIELD

The present invention relates to a water-soluble polymer composition, a water-soluble polymer aqueous solution, an industrial chemical, a method for producing a water-soluble polymer aqueous solution, a kit, and a method for producing paper.

BACKGROUND ART

Water-soluble polymers such as polyalkylene oxides are widely used as industrial chemicals (for example, a viscosity agent for papermaking, an aggregating agent, a dispersant, and a sedimentation accelerator) in various industrial applications such as papermaking applications, mining applications, cement applications, and dyeing applications (see Patent Document 1). In these fields, water-soluble polymers are used as aqueous solutions usually having a concentration of 1 ppm to 15% in many cases.

PRIOR ART DOCUMENT

PATENT DOCUMENT

Patent Document 1: WO 2017/104496 A

SUMMARY OF THE INVENTION

PROBLEMS TO BE SOLVED BY THE INVENTION

In the industrial fields as described above, the water used for preparing a water-soluble polymer aqueous solution may contain iron ions, for example when industrial water is used or when iron rust is formed on a pipe.
Iron ions contained in a water-soluble polymer aqueous solution cause a problem of decreasing the viscosity of the aqueous solution over time.
For example, in a papermaking process in the production of paper, a paper material is dispersed in water and diluted, and then the obtained material is placed on a wire (net) to drop water, whereby papermaking is performed (wire part). The water is blended with a viscosity agent for papermaking such as a water-soluble polymer, so that the viscosity of the water in which the paper material (pulp fibers) is dispersed is increased to uniformly disperse the paper material and inhibit sedimentation of the paper material. It takes a predetermined time for the viscosity agent for papermaking to dissolve in water or to be diluted with water then to be blended in an aqueous dispersion of a paper material, and for the paper material to be subjected to papermaking. When the viscosity of the aqueous dispersion of the paper material decreases over time during this period, there arises a problem that the viscosity agent for papermaking does not sufficiently exert its effect of dispersing the paper material uniformly or preventing sedimentation of the paper material.
In particular, when extremely thin paper such as tissue paper, paper that is used for manufacturing an electronic member and is required to have thin and high uniformity, and the like are produced, the decrease in viscosity of the aqueous dispersion of a paper material has a large influence on the uniformity of the paper.
Under such circumstances, a main object of the present invention is to provide a water-soluble polymer composition with which the viscosity of an aqueous solution containing iron ions is inhibited from decreasing over time. Another object of the present invention is to provide a water-soluble polymer aqueous solution, an industrial chemical, a method for producing a water-soluble polymer aqueous solution, a kit, and a method for producing paper using the water-soluble polymer.

MEANS FOR SOLVING THE PROBLEM

The inventors of the present invention have conducted intensive studies to solve the above problems. As a result, the inventors of the present invention have found that the viscosity of a water-soluble polymer aqueous solution is inhibited from decreasing over time when the water-soluble polymer aqueous solution contains iron ions and a water-soluble polymer composition containing a water-soluble polymer, a phenolic antioxidant, and an inorganic salt excluding a transition metal salt, wherein the content of the inorganic salt is set in the range of 0.001 to 10 parts by mass with respect to 100 parts by mass of the water-soluble polymer. The present invention has been completed through further intensive studies based on such a finding.
That is, the present invention provides an invention having the following configuration.

Item 1. A water-soluble polymer composition including, at least, a water-soluble polymer, a phenolic antioxidant, and an inorganic salt excluding a transition metal salt,
wherein the inorganic salt has a content of 0.001 to 10 parts by mass with respect to 100 parts by mass of the water-soluble polymer.

Item 2. The water-soluble polymer composition according to item 1, wherein the water-soluble polymer is at least one polymer selected from the group consisting of a (meth)acrylamide homopolymer, a neutralized product of a (meth)acrylamide-(meth)acrylic acid copolymer, polyethylene oxide, polypropylene oxide, and an ethylene oxide-propylene oxide copolymer.

Item 3. The water-soluble polymer composition according to item 1 or 2, wherein the inorganic salt exhibits neutrality or alkalinity in an aqueous solution state thereof.

Item 4. The water-soluble polymer composition according to any one of items 1 to 3, wherein the phenolic antioxidant has a content of 0.001 to 5 parts by mass with respect to 100 parts by mass of the water-soluble polymer.

Item 5. The water-soluble polymer composition according to any one of items 1 to 4, wherein the inorganic salt has a proportion of 20 to 10000 parts by mass with respect to 100 parts by mass of the phenolic antioxidant.

Item 6. The water-soluble polymer composition according to any one of items 1 to 5, wherein the water-soluble polymer is a viscosity agent for papermaking.

Item 7. A water-soluble polymer aqueous solution including the water-soluble polymer composition according to any one of items 1 to 6, iron ions, and water.

Item 8. An industrial chemical including the water-soluble polymer composition according to any one of items 1 to 6.

Item 9. A method for producing a water-soluble polymer aqueous solution, the method including a step of mixing the water-soluble polymer composition according to any one of items 1 to 6 and an aqueous solution containing iron ions.

Item 10. A kit including:

a first agent containing a water-soluble polymer and a phenolic antioxidant; and
a second agent containing an inorganic salt excluding a transition metal salt,
wherein
the inorganic salt of the second agent has a proportion of 0.001 to 10 parts by mass with respect to 100 parts by mass of the water-soluble polymer of the first agent.

Item 11. A method for producing a water-soluble polymer aqueous solution using the kit according to item 10, the method including:

a step of mixing the second agent and an aqueous solution containing iron ions to obtain a mixed solution; and
a step of mixing the mixed solution and the first agent.

Item 12. A method for producing paper, the method including:

a step of mixing the water-soluble polymer aqueous solution according to item 7 and a paper material to prepare an aqueous dispersion of the paper material; and
a step of subjecting the aqueous dispersion of the paper material to papermaking.

ADVANTAGES OF THE INVENTION

According to the present invention, it is possible to provide a water-soluble polymer composition with which the viscosity of its aqueous solution is inhibited from decreasing over time when the aqueous solution contains iron ions. According to the present invention, it is also possible to provide a water-soluble polymer aqueous solution, an industrial chemical, a method for producing a water-soluble polymer aqueous solution, a kit, and a method for producing paper using the water-soluble polymer composition.

BRIEF DESCRIPTION OF THE DRAWINGS

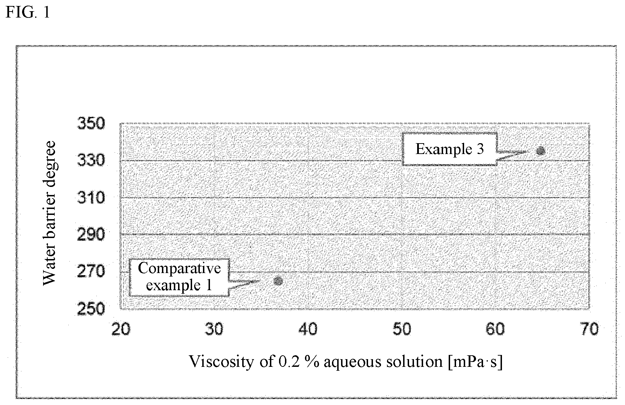

Fig. 1 is a graph showing the evaluation results of water-soluble polymer compositions of Example 3 and Comparative Example 1 as a viscosity agent for papermaking (a graph showing the relationship between the viscosity of a 0.2% aqueous solution and the water barrier degree).

EMBODIMENTS OF THE INVENTION

The water-soluble polymer composition of the present invention includes at least a water-soluble polymer, a phenolic antioxidant, and an inorganic salt excluding a transition metal salt. The water-soluble polymer composition of the present invention having such a configuration can suitably inhibit the viscosity of its aqueous solution from decreasing over time when the aqueous solution contains iron ions. Hereinafter, the water-soluble polymer composition of the present invention, a water-soluble polymer aqueous solution, an industrial chemical, a method for producing a water-soluble polymer aqueous solution, a kit, and a method for producing paper using the water-soluble polymer composition will be described in detail.

The water-soluble polymer composition of the present invention contains at least a water-soluble polymer, a phenolic antioxidant, and an inorganic salt excluding a transition metal salt, wherein the inorganic salt has a content of 0.001 to 10 parts by mass with respect to 100 parts by mass of the water-soluble polymer.

[Water-soluble polymer]

The water-soluble polymer contained in the water-soluble polymer composition of the present invention is not particularly limited as long as it is a polymer having water solubility.

Specific examples of the water-soluble polymer include water-soluble polyalkylene oxides such as polyethylene oxide, polypropylene oxide, and ethylene oxide-propylene oxide copolymer; neutralized products of a (meth)acrylamide-(meth)acrylic acid copolymer; and a (meth)acrylamide homopolymer. The copolymer may be a block copolymer or a random copolymer. As propylene oxide constituting the polypropylene oxide, 1,2-propylene oxide or 1,3-propylene oxide may be typically used, and both may be used in combination.

The water-soluble polyalkylene oxide may be produced by a known method, for example, a method of polymerizing an alkylene oxide in the presence of an alkali or metal catalyst. As the water-soluble polyalkylene oxide, for example, commercially available products such as a product name "PEO" (registered trademark) series manufactured by Sumitomo Seika Chemicals Co., Ltd., a product name "POLYOX" series manufactured by The Dow Chemical Company, a product name "Alkox" series manufactured by Meisei Chemical Works, Ltd., and a product name "ZEOSPAN" series manufactured by Zeon Corporation may also be used.

The degree of neutralization of the neutralized product of a (meth)acrylamide-(meth)acrylic acid copolymer is preferably 20 to 100% and preferably 40 to 100%.

The molecular weight of the water-soluble polymer is preferably 100,000 to 22 million and more preferably 200,000 to 15 million as a viscosity average molecular weight from the viewpoint of suitably inhibiting the viscosity of an aqueous solution of the water-soluble polymer composition of the present invention from decreasing over time when the aqueous solution contains iron ions. The method for measuring the viscosity average molecular weight is as follows.

<Viscosity average molecular weight>

The viscosity average molecular weight is calculated using the Staudinger equation from a value of the limiting viscosity obtained using an Ostwald viscometer. Specifically, the viscosity average molecular weight [M] of the polyalkylene oxide is calculated using the following Staudinger equation from the value of the limiting viscosity [η] obtained using an Ostwald viscometer.

$$[\eta] = 6.4 \times 10^{-5} \times M^{0.82}$$

The solvent is pure water, and the measurement temperature is set to 35°C.

The viscosity average molecular weight (Mw) of the (meth)acrylamide homopolymer and the neutralized product of a (meth)acrylamide-(meth)acrylic acid copolymer is a value calculated using the following conversion formula by dissolving the (meth)acrylamide homopolymer or the neutralized product of a (meth)acrylamide-(meth)acrylic acid copolymer in a 1N aqueous sodium nitrate solution and obtaining the limiting viscosity [η] at 30°C.

$$\text{Limiting viscosity formula: } [\eta] = 3.73 \times 10^{-4} \times (Mw) \times 0.66$$

From the viewpoint of suitably inhibiting the viscosity of an aqueous solution of the water-soluble polymer composition of the present invention from decreasing over time when the aqueous solution contains iron ions, the viscosity at 25°C when the aqueous solution is a 0.5 mass% aqueous solution is preferably 10 to 4000 mPa·s, and the viscosity at 25°C when the aqueous solution is a 5.0 mass% aqueous solution is preferably 50 to 80,000 mPa·s. The method for measuring the viscosity of the aqueous solution is as follows.

<Measurement of viscosity of aqueous solution>

The viscosity of the obtained aqueous solution is measured with a B-type rotational viscometer (rotation speed 12 r/min, 3 minutes, 25°C) by immersing a beaker containing the aqueous solution in a thermostatic bath at 25°C for 30 minutes or more. The rotor used for the measurement is rotor No. 1 when the viscosity of the measurement target is less than 500 mPa·s, rotor No. 2 when the viscosity is 500 mPa·s or more and less than 2,500 mPa·s, and rotor No. 3 when the viscosity is 2,500 mPa·s or more and less than 10,000 mPa·s.

The water-soluble polymer contained in the water-soluble polymer composition of the present invention may be one type or two or more types.

In the water-soluble polymer composition of the present invention, the content (blend proportion) of the water-soluble polymer is preferably 70.00 mass% or more (for example, 70.00 to 99.99 mass%), more preferably 80.00 mass% or more (for example, 80.00 to 99.99 mass%), and still more preferably 90.00 mass% or more (for example, 90.00 to 99.99 mass%) from the viewpoint of suitably inhibiting the viscosity of an aqueous solution of the water-soluble polymer composition of the present invention from decreasing over time when the aqueous solution contains iron ions.

[Inorganic salt excluding transition metal salt]

The inorganic salt excluding a transition metal salt contained in the water-soluble polymer composition of the present invention is an inorganic salt that is not a transition metal salt. That is, the inorganic salt does not include an iron salt or the like.

It is preferable that the inorganic salt exhibit neutrality or alkalinity in an aqueous solution state thereof. Specifically, the pH of a 40 mmol% aqueous solution of the inorganic salt is preferably 7 or more (for example, 7 to 13). The method for measuring the pH is a glass electrode method.

The inorganic salt is not particularly limited as long as it is not a transition metal salt, but from the viewpoint of suitably inhibiting the viscosity of an aqueous solution of the water-soluble polymer composition of the present invention from decreasing over time when the aqueous solution contains iron ions, preferred specific examples thereof include carbonates such as potassium carbonate, lithium carbonate, sodium carbonate, magnesium carbonate, and sodium hydrogen carbonate; silicates such as sodium silicate; phosphates such as trisodium phosphate; sulfates such as magnesium sulfate and sodium sulfate; sulfites such as sodium sulfite; thiosulfates such as sodium thiosulfate; chlorides such as calcium chloride and lithium chloride; bromides such as lithium bromide; iodides such as sodium iodide; sulfides such as sodium sulfide; hydrogen sulfide salt such as sodium hydrogen sulfide; nitrates such as sodium nitrate; and nitrites such as sodium nitrite.

The inorganic salt contained in the water-soluble polymer composition of the present invention may be one type or two or more types.

The content (blending amount) of the inorganic salt in the water-soluble polymer composition of the present invention may be 0.001 to 10 parts by mass with respect to 100 parts by mass of the water-soluble polymer from the viewpoint of suitably inhibiting the viscosity of an aqueous solution of the water-soluble polymer composition of the present invention from decreasing over time when the aqueous solution contains iron ions. The lower limit is preferably 0.01 parts by mass or more and more preferably 0.05 parts by mass or more, and the upper limit is preferably 5 parts by mass or less and more preferably 2 parts by mass or less with respect to 100 parts by mass of the water-soluble polymer from the viewpoint of more suitably exhibiting the effect of the present invention. Preferable ranges of the content include 0.001 to 5 parts by mass, 0.001 to 2 parts by mass, 0.01 to 10 parts by mass, 0.01 to 5 parts by mass, 0.01 to 2 parts by mass, 0.05 to 10 parts by mass, 0.05 to 5 parts by mass, and 0.05 to 2 parts by mass.

[Phenolic antioxidant]

As the phenolic antioxidant contained in the water-soluble polymer composition of the present invention, a known phenolic antioxidant may be used. Examples of the phenolic antioxidant include dibutylhydroxytoluene (BHT), dibutylhydroxyanisole (BHA), octadecyl-3-(3,5-di-tert-butyl-4-hydroxyphenyl) propionate, 2,2'-methylenebis(4-methyl-6-tert-butylphenol), 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 4,4'-butylidenebis(3-methyl-6-tert-butylphenol), 4,4'-thiobis(3-methyl-6-tert-butylphenol), tetrakis[methylene-3-(3,5-di-tert-butyl-4-hydroxyphenyl) propionate]methane, 3,9-bis[2-(3-(3-tert-butyl-4-hydroxy-5-methylphenyl)-propionyloxy)-1,1-dimethylethyl]-2,4,8,10-tetraoxaspiro[5,5]undecane, phenolic compounds commercially available as a product name "ADK STAB AO" series from ADEKA Corporation, and a compound corresponding to a phenolic compound among various compounds commercially available as a product name "Irganox" series from BASF SE.

The phenolic antioxidant contained in the water-soluble polymer composition of the present invention may be one type or two or more types.

The lower limit of the content (blending amount) of the phenolic antioxidant in the water-soluble polymer composition of the present invention is preferably 0.001 parts by mass or more, more preferably 0.01 parts by mass or more, and still more preferably 0.05 parts by mass or more, and the upper limit is preferably 5 parts by mass or less, more preferably 2 parts by mass or less, and still more preferably 1 part by mass or less, with respect to 100 parts by mass of the water-soluble polymer from the viewpoint of suitably inhibiting the viscosity of an aqueous solution of the water-soluble polymer composition of the present invention from decreasing over time when the aqueous solution contains iron ions. Preferable ranges of the content include 0.001 to 5 parts by mass, 0.001 to 2 parts by mass, 0.001 to 1 parts by mass, 0.01 to 5 parts by mass, 0.01 to 2 parts by mass, 0.01 to 1 parts by mass, 0.05 to 5 parts by mass, 0.05 to 2 parts by mass, and 0.05 to 1 parts by mass.

In the water-soluble polymer composition of the present invention, the proportion of the inorganic salt with respect to 100 parts by mass of the phenolic antioxidant is preferably 20 to 10000 parts by mass from the viewpoint of suitably inhibiting the viscosity of an aqueous solution of the water-soluble polymer composition of the present invention from decreasing over time when the aqueous solution contains iron ions.

The water-soluble polymer composition of the present invention preferably has a pH of 5 to 13 and more preferably has a pH of 6 to 12 when an aqueous solution of the water-soluble polymer composition has a concentration of the water-soluble polymer dissolved in ion-exchanged water of 0.2%. The method for measuring the pH is specifically as follows.

<Measurement of pH>

The pH is measured in a room temperature (25°C) environment using a commercially available pH meter (for example, a pH meter D-51 manufactured by HORIBA, Ltd., calibrated at 3 points), and the pH value at the time when the indicated value is stabilized is read.

The water-soluble polymer composition of the present invention may contain various additives (excluding transition metal salts) in addition to the water-soluble polymer, the inorganic salt, and the phenolic antioxidant described above. The additive may be appropriately selected according to the use of the water-soluble polymer composition of the present invention, and a known additive for each application may be used. Examples of the additive include antioxidants other than phenolic antioxidants, ultraviolet absorbers, fillers, colorants (for example, pigments, and dyes), antiseptics, rust inhibitors, surfactants, solvents (for example, organic solvents), fluidity improvers (for example, silica), viscosity modifiers (for example, hydrophilic silica and water-soluble polymer), and electrolytes. The additive contained in the water-soluble polymer composition of the present invention may be one type or two or more types. The content of the additive in the water-soluble polymer composition of the present invention may be appropriately set according to its use and the like.

The water-soluble polymer composition of the present invention is not limited to particular properties, and for example, the water-soluble polymer composition may be a solid (for example, in the form of powder particle (powdery or particulate), lump, and the like) at 25°C and 1 atm, or may be a liquid or a liquid form such as a solution or a dispersion liquid. When the water-soluble polymer composition of the present invention is made into a liquid form, it is preferable to use water, and in this case, the water-soluble polymer composition contains a water-soluble polymer, a phenolic antioxidant, an inorganic salt excluding a transition metal salt, and water.

The water-soluble polymer composition of the present invention may be produced by various methods. For example, the water-soluble polymer composition in a solid state may be prepared, for example, by a method of dry blending required components at once or in a stepwise manner. The water-soluble polymer composition in a liquid form may be prepared, for example, by a method in which a composition prepared by dry blending required components is charged into and mixed with a solvent or a dispersion medium, then dissolved or dispersed, or by a method in which required components are individually charged into and mixed with a solvent or a dispersion medium at once or in a stepwise manner, then dissolved or dispersed. In the latter method for preparing the water-soluble polymer composition in a liquid form, for example, a method of preparing a solution or dispersion liquid of the water-soluble polymer and appropriately blending the inorganic salt, the phenolic antioxidant, and the like into the solution or dispersion liquid may be adopted. The concentration of the water-soluble polymer composition in a liquid form may be adjusted by controlling the solvent or dispersion medium used at the time of preparation or by appropriately removing the solvent or dispersion medium after preparation.

The water-soluble polymer composition in a solid form may also be prepared by removing and drying a solvent or a dispersion medium from the water-soluble polymer composition in a liquid form.

The solvent or dispersion medium used for preparing the water-soluble polymer composition in a liquid form is water or various organic media and is not particularly limited. The water that may be used here is usually preferably purified water such as ion-exchanged water or pure water, but it may be tap water or industrial water depending on the use of the water-soluble polymer composition. Examples of the organic medium that may be used here include alcohols such as methanol and ethanol, esters such as ethylene carbonate and propylene carbonate, ketones such as acetone and methyl ethyl ketone, ethers such as tetrahydrofuran, aromatic hydrocarbons such as benzene, toluene, and xylene, and polar solvents such as dimethylformamide, chloroform, and dichloroethane. The organic medium to be used may be one type or two or more types.

The water-soluble polymer composition of the present invention may be used for industrial chemicals (for example, a viscosity agent for papermaking, an aggregating agent, a dispersant, or a sedimentation accelerator) in various industrial applications such as papermaking applications, mining applications, cement applications, and dyeing applications. The water-soluble polymer composition of the present invention is particularly suitable as a viscosity agent for papermaking.

When the water-soluble polymer composition of the present invention is used, for example, as a viscosity agent for papermaking in the production of paper, the water-soluble polymer composition of the present invention may be used in the form of powder particles, which may be mixed with water at the time of use to form a water-soluble polymer aqueous solution, and the water-soluble polymer aqueous solution may be further adjusted so that the concentration of the water-soluble polymer aqueous solution containing a paper material is set to around 1 to 5000 ppm when the paper material is subjected to papermaking.

A method for producing paper of the present invention is, for example, a method including a step of mixing a water-soluble polymer aqueous solution (containing iron ions) prepared using the water-soluble polymer composition of the present invention as described above with a paper material to prepare an aqueous dispersion of the paper material, and a step of subjecting the obtained aqueous dispersion of the paper material to papermaking. The use method of the viscosity agent for papermaking in the production of paper is known, and the present invention can also be applied to a known papermaking method (method for producing paper) when the water-soluble polymer composition of the present invention is used as a viscosity agent for papermaking. When the water-soluble polymer composition of the present invention is used for other industrial applications, it can also be applied to a known method.

As described above, in the industrial field as described above, the water used for preparing an alkylene oxide aqueous solution may contain iron ions, for example when industrial water is used or when iron rust is formed on a pipe. When a water-soluble polymer aqueous solution of the water-soluble polymer composition of the present invention contains iron ions, the viscosity of the water-soluble polymer aqueous solution is inhibited from decreasing over time. Thus, for the preparation of the water-soluble polymer aqueous solution, an aqueous solution containing iron ions may be used.

The water-soluble polymer composition of the present invention may also be a two-agent type kit. That is, the water-soluble polymer composition of the present invention includes a first agent containing a water-soluble polymer and a phenolic antioxidant, and a second agent containing an inorganic salt excluding a transition metal salt, wherein the inorganic salt of the second agent has a proportion 0.001 to 10 parts by mass with respect to 100 parts by mass of the water-soluble polymer of the first agent. When a water-soluble polymer aqueous solution is produced using the kit, it is preferable to produce the water-soluble polymer aqueous solution by a method including a step of mixing the second agent and an aqueous solution containing iron ions to obtain a mixed solution, and a step of mixing the obtained mixed solution and the first agent. Since the inorganic salt is mixed with an aqueous solution containing iron ions in advance before the water-soluble polymer and the aqueous solution containing iron ions are mixed, the viscosity of the aqueous solution of the water-soluble polymer can be suitably inhibited from decreasing over time.

EXAMPLES

Hereinafter, the present invention will be described in detail with reference to Examples and Comparative Examples. The present invention is not limited to Examples.

(Example 1)

A polyethylene oxide in an amount of 1.993 parts by mass having a viscosity average molecular weight of 8 million, 0.0020 parts by mass of dibutylhydroxytoluene (BHT), and 0.0050 parts by mass of potassium carbonate were subjected to dry blending, whereby a water-soluble polymer composition (1) was produced.

Next, 997.9977 parts by mass of ion-exchanged water and 0.0023 parts by mass of iron (II) chloride were placed in a 1000 mL plastic beaker, 2 parts by mass of the water-soluble polymer composition (1) obtained above was added thereto while stirring the mixture under the condition of a tip peripheral speed of 1.0 m/s using a flat plate (80 mm in width and 25 mm in length), and stirring was continued for 3 hours under the same conditions, whereby a water-soluble polymer aqueous solution (1) containing iron (II) ions was produced.

(Example 2)

A polyethylene oxide in an amount of 1.993 parts by mass having a viscosity average molecular weight of 8 million, 0.0020 parts by mass of dibutylhydroxytoluene (BHT), and 0.0050 parts by mass of lithium carbonate were subjected to dry blending, whereby a water-soluble polymer composition (2) was produced. Next, a water-soluble polymer aqueous solution (2) containing iron (II) ions was produced in the same manner as in Example 1 except that the water-soluble polymer composition (2) was used instead of the water-soluble polymer composition (1).

(Example 3)

A polyethylene oxide in an amount of 1.993 parts by mass having a viscosity average molecular weight of 8 million, 0.0020 parts by mass of dibutylhydroxytoluene (BHT), and 0.0050 parts by mass of sodium carbonate were subjected to dry blending, whereby a water-soluble polymer composition (3) was produced. Next, a water-soluble polymer aqueous solution (3) containing iron (II) ions was produced in the same manner as in Example 1 except that the water-soluble polymer composition (3) was used instead of the water-soluble polymer composition (1).

(Example 4)

A polyethylene oxide in an amount of 1.993 parts by mass having a viscosity average molecular weight of 8 million, 0.0020 parts by mass of dibutylhydroxytoluene (BHT), and 0.0050 parts by mass of sodium silicate were subjected to dry blending, whereby a water-soluble polymer composition (4) was produced. Next, a water-soluble polymer aqueous solution (4) containing iron (II) ions was produced in the same manner as in Example 1 except that the water-soluble polymer composition (4) was used instead of the water-soluble polymer composition (1).

(Example 5)

A polyethylene oxide in an amount of 1.993 parts by mass having a viscosity average molecular weight of 8 million, 0.0020 parts by mass of dibutylhydroxytoluene (BHT), and 0.0050 parts by mass of trisodium phosphate were subjected to dry blending, whereby a water-soluble polymer composition (5) was produced. Next, a water-soluble polymer aqueous solution (5) containing iron (II) ions was produced in the same manner as in Example 1 except that the water-soluble polymer composition (5) was used instead of the water-soluble polymer composition (1).

(Example 6)

A polyethylene oxide in an amount of 1.903 parts by mass having a viscosity average molecular weight of 8 million, 0.0019 parts by mass of dibutylhydroxytoluene (BHT), and 0.0952 parts by mass of lithium carbonate were subjected to dry blending, whereby a water-soluble polymer composition (6) was produced. Next, a water-soluble polymer aqueous solution (6) containing iron (II) ions was produced in the same manner as in Example 1 except that the water-soluble polymer composition (6) was used instead of the water-soluble polymer composition (1).

(Example 7)

A polyethylene oxide in an amount of 1.816 parts by mass having a viscosity average molecular weight of 8 million, 0.0018 parts by mass of dibutylhydroxytoluene (BHT), and 0.1818 parts by mass of lithium carbonate were subjected to dry blending, whereby a water-soluble polymer composition (7) was produced. Next, a water-soluble polymer aqueous solution (7) containing iron (II) ions was produced in the same manner as in Example 1 except that the water-soluble polymer composition (7) was used instead of the water-soluble polymer composition (1).

(Example 8)

A polyethylene oxide in an amount of 1.993 parts by mass having a viscosity average molecular weight of 8 million and 0.0020 parts by mass of dibutylhydroxytoluene (BHT) were subjected to dry blending, whereby a first agent of a water-soluble polymer composition (8) was produced. Next, 997.9977 parts by mass of ion-exchanged water and 0.0023 parts by mass of iron (II) chloride were put in a 1000 mL plastic beaker, 0.0050 parts by mass of lithium carbonate was added as a second agent while stirring the mixture under the condition of a tip peripheral speed of 1.0 m/s using a flat plate (80 mm in width and 25 mm in length), and stirring was continued for 10 minutes under the same conditions, whereby an aqueous solution containing iron (II) and an inorganic salt was produced. Next, 1.995 parts by mass of the first agent was charged into the aqueous solution, and stirring was continued for 3 hours under the same conditions, whereby a water-soluble polymer aqueous solution (8) containing iron (II) ions was produced.

(Example 9)

A water-soluble polymer composition (9) was produced in the same manner as in Example 2 except that a sodium salt of a (meth)acrylamide-(meth)acrylic acid copolymer (PAM manufactured by Meisei Chemical Works, Ltd., product name: PAMOL H) was used instead of 1.993 parts by mass of the polyethylene oxide having a viscosity average molecular weight of 8 million.

(Comparative Example 1)

A water-soluble polymer composition (10) was produced in the same manner as in Example 1 except that no inorganic salt was used. Next, a water-soluble polymer aqueous solution (10) containing iron (II) ions was produced in the same manner as in Example 1 except that the water-soluble polymer composition (10) was used instead of the water-soluble polymer composition (1).

(Comparative Example 2)

A water-soluble polymer composition (11) was produced in the same manner as in Example 1 except that 0.0050 parts by mass of dibutylhydroxytoluene was used instead of 0.0050 parts by mass of potassium carbonate. Next, a water-soluble polymer aqueous solution (11) containing iron (II) ions was produced in the same manner as in Example 1 except that the water-soluble polymer composition (11) was used instead of the water-soluble polymer composition (1).

(Comparative Example 3)

A water-soluble polymer composition (12) was produced in the same manner as in Example 1 except that 0.0050 parts by mass of 2-mercaptobenzothiazole was used instead of 0.0050 parts by mass of potassium carbonate. Next, a water-soluble polymer aqueous solution (12) containing iron (II) ions was produced in the same manner as in Example 1 except that the water-soluble polymer composition (12) was used instead of the water-soluble polymer composition (1).

(Comparative Example 4)

A water-soluble polymer composition (13) was produced in the same manner as in Example 1 except that 0.0050 parts by mass of zinc stearate was used instead of 0.0050 parts by mass of potassium carbonate. Next, a water-soluble polymer aqueous solution (13) containing iron (II) ions was produced in the same manner as in Example 1 except that the water-soluble polymer composition (13) was used instead of the water-soluble polymer composition (1).

(Comparative Example 5)

A water-soluble polymer composition (14) was produced in the same manner as in Example 1 except that 0.0050 parts by mass of magnesium oxide was used instead of 0.0050 parts by mass of potassium carbonate. Next, a water-soluble polymer aqueous solution (14) containing iron (II) ions was produced in the same manner as in Example 1 except that the water-soluble polymer composition (14) was used instead of the water-soluble polymer composition (1).

(Comparative Example 6)

A water-soluble polymer composition (15) was produced in the same manner as in Example 2 except that dibutylhydroxytoluene (BHT) was not used. Next, a water-soluble polymer aqueous solution (15) containing iron (II) ions was produced in the same manner as in Example 1 except that the water-soluble polymer composition (15) was used instead of the water-soluble polymer composition (1).

(Comparative Example 7)

Ion-exchanged water in an amount of 997.9977 parts by mass and 0.0023 parts by mass of iron (II) chloride were placed in a 1000 mL plastic beaker, 2 parts by mass of polyalkylene oxide was added thereto while stirring the mixture under the condition of a tip peripheral speed of 1.0 m/s using a flat plate (80 mm in width and 25 mm in length), and stirring was continued for 3 hours under the same conditions, whereby a water-soluble polymer aqueous solution (16) containing iron (II) ions was produced.

[Change in viscosity over time]

The viscosity immediately after the production of each water-soluble polymer aqueous solution produced in Examples 1 to 9 and Comparative Examples 1 to 7 (storage days of aqueous solution: 0 days) and the viscosity after 24 hours (storage days of aqueous solution: 1 day) were measured under the following conditions. The viscosity was measured using a B-type rotational viscometer (rotor No. 1 manufactured by TOKIMEC, measurement conditions: rotation speed 30 rpm, 3 minutes). The storage for 24 hours was performed by placing the water-soluble polymer aqueous solution at 25°C in a 500 mL glass container. The glass container was kept in a sealed state under an environment of 40°C and 75% RH in a thermo-hygrostat (model number: PR-2ST manufactured by ESPEC). At the time of viscosity measurement, the glass container containing the water-soluble polymer aqueous solution was taken out from the thermo-hygrostat, immersed in a thermostatic bath at room temperature (25°C) for about 60 minutes, and then the viscosity was measured. Table 1 shows the measured viscosity (mPa s), viscosity retention rate (%), and pH. The pH was measured using a pH meter D-51 manufactured by HORIBA, Ltd., calibrated at 3 points, and the pH value at the time when the indicated value was stabilized was read.

In Examples 1 to 8 and Comparative Examples 1 to 7 in which a polyalkylene oxide was used as the water-soluble polymer, the viscosity retention rate (%) was based on the viscosity of an aqueous solution (0) containing only polyethylene oxide and water in which no iron (II) ions, phenolic antioxidant, or inorganic salt are blended in the composition of the water-soluble polymer aqueous solution (1) containing iron (II) ions of Example 1 was used as a reference. In Example 9 in which the sodium salt of a (meth)acrylamide-(meth)acrylic acid copolymer was used as the water-soluble polymer, the viscosity of an aqueous solution (0) containing only the polyethylene oxide or the sodium salt of a (meth)acrylamide-(meth)acrylic acid copolymer and water in which no iron (II) ions, phenolic antioxidant, or the inorganic salt are blended in the composition of the water-soluble polymer aqueous solution (9) containing iron (II) ions of Example 9 was used as a reference. The calculation formula of the viscosity retention rate is as follows. The larger the reduction range of the viscosity retention rate from immediately after production to one day later is, the larger the viscosity reduction over time is.

$$\text{Viscosity retention rate} = (\{\text{viscosity of polyethylene oxide aqueous solution at each time point [mPa·s]/viscosity of polyethylene oxide aqueous solution (0) at day 0 [mPa·s]}\} \times 100)$$

[Table 1]

| | Water-soluble polymer composition | | | | Change over time | | |
| --- | --- | --- | --- | --- | --- | --- | --- |
| | Water-soluble polymer | Phenolic antioxidant | Inorganic salt | Other | Evaluation item | Day zero | Day one |
| Example 1 | PEO | BHT | Potassium carbonate 2,500 ppm | - | Viscosity mPa·s | 58.4 | 57.2 |
| | | | | | Viscosity retention rate % | 97 | 95 |
| | | | | | pH | 6.8 | 6.9 |
| Example 2 | PEO | BHT | Lithium carbonate 2,500 ppm | - | Viscosity mPa·s | 58.0 | 60.4 |
| | | | | | Viscosity retention rate % | 91 | 94 |
| | | | | | pH | 7.0 | 7.1 |
| Example 3 | PEO | BHT | Sodium carbonate 2,500 ppm | - | Viscosity mPa·s | 60.8 | 58.8 |
| | | | | | Viscosity retention rate % | 101 | 98 |
| | | | | | pH | 7.2 | 7.3 |
| Example 4 | PEO | BHT | Sodium silicate 2,500 ppm | - | Viscosity mPa·s | 52.0 | 50.4 |
| | | | | | Viscosity retention rate % | 87 | 84 |
| | | | | | pH | 6.7 | 7.6 |

(continued)

| | Water-soluble polymer composition | | | | Change over time | | |
|---|---|---|---|---|---|---|---|
| | Water-soluble polymer | Phenolic antioxidant | Inorganic salt | Other | Evaluation item | Day zero | Day one |
| Example 5 | PEO | BHT | Trisodium phosphate 2,500 ppm | - | Viscosity mPa·s | 57.0 | 53.2 |
| | | | | | Viscosity retention rate % | 89 | 83 |
| | | | | | pH | 6.8 | 7.1 |
| Example 6 | PEO | BHT | Lithium carbonate 50,000 ppm | - | Viscosity mPa·s | 61.0 | 58.8 |
| | | | | | Viscosity retention rate % | 95 | 92 |
| | | | | | pH | 10.3 | 10.2 |
| Example 7 | PEO | BHT | Lithium carbonate 100,000 ppm | - | Viscosity mPa·s | 54.0 | 54.0 |
| | | | | | Viscosity retention rate % | 84 | 84 |
| | | | | | pH | 10.4 | 10.3 |
| Example 8 | PEO | BHT | Potassium carbonate 2,500 ppm mixed in advance with iron ion solution | - | Viscosity mPa·s | 64.8 | 68.8 |
| | | | | | Viscosity retention rate % | 101 | 108 |
| | | | | | pH | - | 7.0 |

| | Water-soluble polymer composition | | | | Change over time | | |
|---|---|---|---|---|---|---|---|
| | Water-soluble polymer | Phenolic antioxidant | Inorganic salt | Other | Evaluation item | Day zero | Day one |
| Example 9 | PAM | BHT | Lithium carbonate 2,500 ppm | - | Viscosity mPa·s | 334.0 | 300.0 |
| | | | | | Viscosity retention rate % | 92 | 83 |
| | | | | | pH | 7.4 | 7.5 |
| Comparative Example 1 | PEO | BHT | - | - | Viscosity mPa·s | 38.4 | 7.2 |
| | | | | | Viscosity retention rate % | 64 | 12 |
| | | | | | pH | 6.2 | 5.4 |
| Comparative Example 2 | PEO | BHT | - | Dibutylhydroxy toluene 2,500 ppm | Viscosity mPa·s | 36.4 | 8.8 |
| | | | | | Viscosity retention rate % | 61 | 15 |
| | | | | | pH | 6.2 | 5.4 |
| Comparative Example 3 | PEO | BHT | - | 2-Mercaptobenzothiazole 2,500 ppm | Viscosity mPa·s | 53.2 | 29.0 |
| | | | | | Viscosity retention rate % | 83 | 45 |
| | | | | | pH | 6.2 | 6.3 |

| | Water-soluble polymer composition | | | | Change over time | | |
| | Water-soluble polymer | Phenolic antioxidant | Inorganic salt | Other | Evaluation item | Day zero | Day one |
|---|---|---|---|---|---|---|---|
| Comparative Example 4 | PEO | BHT | - | Zinc stearate 2,500 ppm | Viscosity mPa·s | 40.0 | 8.0 |
| | | | | | Viscosity retention rate % | 63 | 13 |
| | | | | | pH | 6.5 | 6.5 |
| Comparative Example 5 | PEO | BHT | - | Magnesium oxide 2,500 ppm | Viscosity mPa·s | 32.0 | 30.4 |
| | | | | | Viscosity retention rate % | 53 | 51 |
| | | | | | pH | 7.3 | 8.0 |
| Comparative Example 6 | PEO | - | Lithium carbonate 2,500 ppm | - | Viscosity mPa·s | 34.0 | 26.0 |
| | | | | | Viscosity retention rate % | 69 | 52 |
| | | | | | pH | 7.1 | - |
| Comparative Example 7 | PEO | - | - | - | Viscosity mPa·s | 6.0 | 5.6 |
| | | | | | Viscosity retention rate % | 12 | 11 |
| | | | | | pH | 4.9 | 4.6 |

[Evaluation as viscosity agent for papermaking]

The water-soluble polymer aqueous solution produced in Example 3 and Comparative Example 1 in an amount of 1000 ppm was added to 1 L of a 0.1% pulp slurry (v.s. pulp) and stirred at 300 rpm for 35 seconds, thereafter the amount of water filtered for 0.5 seconds was measured using a static paper type dynamic R/D tester (SDR-DT, manufactured by KOBAYASHI MANUFACTURE CO., LTD.). From the difference from the amount of water filtered for 0.5 seconds with 1 L of pulp slurry when the water-soluble polymer composition was not added, the water barrier degree (index of the effect as a viscosity agent for papermaking) was determined. The results are shown in the graph of Fig. 1. The water barrier degree indicates the degree of delay of the filtration speed, and it is considered that this delay is due to the filter effect from the pulp uniformly dispersed and filtered and the viscosity of the viscosity agent for papermaking fixed to the pulp. Thus, it can be seen that the water-soluble polymer aqueous solution of Example 3 has a large water barrier degree and has a good uniform dispersibility of a paper material in water when used for papermaking.

$$\text{Water barrier degree} = \text{amount of filtered water [addition of water-soluble}$$

$$\text{polymer composition: 0 ppm] (mL) - amount of filtered water [water-soluble polymer}$$

$$\text{composition: the addition amount] (mL)}$$

**Claims**

1. A water-soluble polymer composition comprising, at least,

   a water-soluble polymer;
   a phenolic antioxidant; and
   an inorganic salt excluding a transition metal salt,
   wherein the inorganic salt has a content of 0.001 to 10 parts by mass with respect to 100 parts by mass of the water-soluble polymer.

2. The water-soluble polymer composition according to claim 1, wherein the water-soluble polymer is at least one polymer selected from the group consisting of a (meth)acrylamide homopolymer, a neutralized product of a (meth)acrylamide-(meth)acrylic acid copolymer, polyethylene oxide, polypropylene oxide, and an ethylene oxide-propylene oxide copolymer.

3. The water-soluble polymer composition according to claim 1 or 2, wherein the inorganic salt exhibits neutrality or alkalinity in an aqueous solution state thereof.

4. The water-soluble polymer composition according to any one of claims 1 to 3, wherein the phenolic antioxidant has a content of 0.001 to 5 parts by mass with respect to 100 parts by mass of the water-soluble polymer.

5. The water-soluble polymer composition according to any one of claims 1 to 4, wherein the inorganic salt has a proportion of 20 to 10000 parts by mass with respect to 100 parts by mass of the phenolic antioxidant.

6. The water-soluble polymer composition according to any one of claims 1 to 5, wherein the water-soluble polymer is a viscosity agent for papermaking.

7. A water-soluble polymer aqueous solution comprising the water-soluble polymer composition according to any one of claims 1 to 6, iron ions, and water.

8. An industrial chemical comprising the water-soluble polymer composition according to any one of claims 1 to 6.

9. A method for producing a water-soluble polymer aqueous solution, the method comprising a step of mixing the water-soluble polymer composition according to any one of claims 1 to 6 and an aqueous solution containing iron ions.

10. A kit comprising:

a first agent containing a water-soluble polymer and a phenolic antioxidant; and
a second agent containing an inorganic salt excluding a transition metal salt,
wherein the inorganic salt of the second agent has a proportion of 0.001 to 10 parts by mass with respect to 100 parts by mass of the water-soluble polymer of the first agent.

11. A method for producing a water-soluble polymer aqueous solution using the kit according to claim 10, the method comprising:

a step of mixing the second agent and an aqueous solution containing iron ions to obtain a mixed solution; and
a step of mixing the mixed solution and the first agent.

12. A method for producing paper, the method comprising:

a step of mixing the water-soluble polymer aqueous solution according to claim 7 and a paper material to prepare an aqueous dispersion of the paper material; and
a step of subjecting the aqueous dispersion of the paper material to papermaking.

FIG. 1

## INTERNATIONAL SEARCH REPORT

| International application No. |
| --- |
| PCT/JP2021/020108 |

### A. CLASSIFICATION OF SUBJECT MATTER
C08K 5/13(2006.01)i; C08L 33/26(2006.01)i; C08L 101/14(2006.01)i; D21H
21/06(2006.01)i; C08L 71/02(2006.01)i; C08K 3/10(2018.01)i
FI: C08L101/14; C08K3/10; C08K5/13; C08L33/26; C08L71/02; D21H21/06
According to International Patent Classification (IPC) or to both national classification and IPC

### B. FIELDS SEARCHED

Minimum documentation searched (classification system followed by classification symbols)
C08K5/13; C08L33/26; C08L101/14; D21H21/06; C08L71/02; C08K3/10

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2017/104496 A1 (SUMITOMO SEIKA CHEMICALS CO., LTD.) 22 June 2017 (2017-06-22) in particular, claims, paragraphs [0037], [0038], examples 1-10, table 1 | 1-8, 10-12 |
| A | paragraph [0034] | 9 |
| A | JP 2001-295196 A (HYMO CORP.) 26 October 2001 (2001-10-26) claims | 1-12 |
| A | JP 63-295794 A (SANYO KOKUSAKU PULP CO., LTD.) 02 December 1988 (1988-12-02) claims | 1-12 |
| A | JP 2003-342464 A (SUMITOMO SEIKA CHEMICALS CO., LTD.) 03 December 2003 (2003-12-03) claims | 1-12 |
| A | JP 56-145941 A (NITTO CHEMICAL INDUSTRY CO.) 13 November 1981 (1981-11-13) claims | 1-12 |

☒ Further documents are listed in the continuation of Box C.    ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 July 2021 (08.07.2021) | 20 July 2021 (20.07.2021) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2021/020108

C (Continuation). DOCUMENTS CONSIDERED TO BE RELEVANT

| Category* | Citation of document, with indication, where appropriate, of the relevant passages | Relevant to claim No. |
|---|---|---|
| A | JP 63-51446 A (TORAY INDUSTRIES, INC.) 04 March 1988 (1988-03-04) claims | 1-12 |

Form PCT/ISA/210 (continuation of second sheet) (January 2015)

INTERNATIONAL SEARCH REPORT
Information on patent family members
International application No.
PCT/JP2021/020108

| Patent Documents referred in the Report | Publication Date | Patent Family | Publication Date |
|---|---|---|---|
| WO 2017/104496 A1 | 22 Jun. 2017 | US 2018/0282513 A1 claims, paragraphs [0035], [0046]-[0047], examples, table 1 EP 3392310 A1 claims, paragraphs [0026], [0037]-[0038], examples, table 1 KR 10-2018-0094854 A CN 108603022 A | |
| JP 2001-295196 A | 26 Oct. 2001 | (Family: none) | |
| JP 63-295794 A | 02 Dec. 1988 | (Family: none) | |
| JP 2003-342464 A | 03 Dec. 2003 | (Family: none) | |
| JP 56-145941 A | 13 Nov. 1981 | US 4317759 A claims | |
| JP 63-51446 A | 04 Mar. 1988 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017104496 A